# EUROPÄISCHE PATENTANMELDUNG

(11) **EP 1 342 532 A2**
(43) Veröffentlichungstag der Anmeldung: **10.09.2003**
(21) Anmeldenummer: 03003580.2
(22) Anmeldetag: 17.02.2003
(51) Int. Cl.: B23Q 1/28, B23Q 17/00, B23Q 11/00, F16P 7/02

(54) **Werkzeugmaschine mit Bremseinrichtung für ein Maschinenteil**

(30) Priorität: 05.03.2002 DE 20203501 U
(71) Anmelder: DECKEL MAHO Pfronten GmbH, 87459 Pfronten (DE)
(72) Erfinder: Bornemann, Armin, 87616 Marktoberdorf (DE)
(74) Vertreter: Beetz & Partner Patentanwälte

(57) **Zusammenfassung**

Gegenstand der Erfindung ist eine Werkzeugmaschine mit mindestens einem motorisch verfahrbaren Maschinenteil, dem eine Bremseinrichtung, eine Wegmesseinrichtung zum Erfassen eines Fahrweges sowie eine Steuereinrichtung mit einer Anzeigeeinheit zugeordnet sind. Es ist eineÜberwachungseinrichtung für die Bremswirkung der Bremseinrichtung vorgesehen, die eine Speichereinrichtung mit darin abgelegten Werten (RW, VW und AW) und eine Vergleichseinrichtung enthält, wobei eine nachlassende Bremswirkung durch Vergleich der von der Wegmesseinrichtung erfassten Bremswege mit den Werten der Speichereinrichtung ermittelt und im gegebenen Fall die Anzeigeeinrichtung aktiviert wird.

## Beschreibung

Die Erfindung betrifft eine Werkzeugmaschine mit mindestens einem motorisch verfahrbaren Maschinenteil, dem eine Bremseinrichtung, eine Wegmeßeinrichtung zum Erfassen eines Fahrweges sowie eine Steuereinrichtung mit einer Anzeigeeinheit zugeordnet sind.

Zu den vorgenannten motorisch verfahrbaren Maschinenteilen gehören insbesondere vertikal bewegliche Konsolen und Schlitten als Träger von Werkstücktischen, Spindelköpfen u.dgl., deren Gewicht bis zu einigen Tonnen betragen kann. Die Antriebssysteme für diese Maschinenteile sind mit einer Betriebsbremse meist in Form einer sog. Motorbremse ausgestattet. Zu diesen Betriebsbremsen sind den vertikal beweglichen schwereren Maschinenteilen in modernen Werkzeugmaschinen zusätzliche Sicherheitsbremsen zugeordnet, die bei z.B. während Wartungs- oder Reparaturarbeiten abgeschalteter Betriebsbremse automatisch ansprechen, um ein willkürliches Abrutschen des jeweiligen Maschinenteils zu verhindern und Gefährdungen auszuschließen. Bei bisher eingesetzten Bremssystemen kann die Funktionsfähigkeit der Betriebsbremsen und auch der Sicherheitsbremsen nicht von außen erkannt werden, was erhebliche Gefahren und Risiken birgt. So kann insbesondere bei Inbetriebnahme-, Wartungs- und Inspektionsarbeiten das nichtvorhersehbare Versagen auch der Sicherheitsbremse zu einem plötzlichen Abrutschen bzw. Abstürzen des Maschinenteils führen. Bei horizontal verfahrbaren Maschinenteilen kann durch Fehlfunktion von zugeordneten Bremseinrichtungen verursachtes Überfahren der vorgegebenen Fahrstrecken zu Kollisionen und Beschädigungen führen.

Aufgabe der Erfindung ist es, eine Werkzeugmaschine zu schaffen, bei der die Funktionsfähigkeit der Bremseinrichtungen für die verfahrbaren Maschinenteile auf einfache und effektive Weise festgestellt und dem Bediener angezeigt wird.

Diese Aufgabe wird erfindungsgemäß gelöst durch eine Überwachungseinrichtung für die Bremswirkung der jeweiligen Bremseinrichtung, die eine Speichereinheit mit darin abgelegten Referenzwerten und eine Vergleichseinheit enthält, welche eine nachlassende Bremswirkung durch Vergleich eines abgelegten Referenzwertes mit Meßwerten aus der Wegmeßeinrichtung ermittelt und eine Anzeige aktiviert.

Ein wichtiger sicherheitstechnischer Aspekt der Erfindung ist die automatische Überwachung der Bremsen von vertikal bewegten Maschinenteilen durch vorgewählte Reaktion der Maschinensteuerung. Aus den Konstruktionsdaten einer neuen Maschine ist bekannt, welche Strecke von einem bewegten Maschinenteil nach Aktivieren der zugehörigen Bremse durch z.B. Betätigen der Nothalt-Taste, Öffnen der Kabinentür, Loslassen der Zustimm-Taste noch zurückgelegt wird. Diese Strecke (Bremsweg) beträgt i.d.R. nur wenige 1/100 mm und wird erfindungsgemäß als Referenzwert in der Speichereinheit der Überwachungseinrichtung abgelegt. Bei jedem Bremsvorgang wird die vom Maschinenteil nach einer Bremsaktivierung zurückgelegte Strecke mittels der Wegmeßeinrichtung als IstWert erfaßt und in der Vergleichseinheit mit dem Referenzwert verglichen. Wird der Referenzwert um einen zuvor festgelegten und abgespeicherten Betrag überschritten, gibt die Überwachungseinrichtung eine optische oder akustische Vorwarn-Anzeige aus, die den Bediener auf einen bereits fortgeschrittenen Verschleiß der Bremse, d.h. ein gewisses Nachlassen der Bremswirkung, aufmerksam macht. Auf diese Anzeige hin kann z.B. die nächstfällige Wartung bestimmt werden.

Wenn sich nach weitergehendem Maschinenbetrieb und wiederholten Bremsvorgängen die gemessene Bremsstrecke bei einem Bremsvorgang weiter vergrößert und einen ebenfalls im Speicher abgelegten Grenzwert erreicht bzw. überschreitet, erfolgt über die Programm-Steuerung die Stillsetzung der Maschine vorzugsweise zusammen mit gleichzeitiger Aktivierung der optischen oder akustischen Anzeige.

Obgleich die erfindungsgemäße Überwachung der Funktionsfähigkeit der Bremsen unter sicherheitstechnischen Gesichtspunkten für die Sicherheitsbremsen von vertikal oder schräg bewegten Maschinenteilen von relativ großer Masse konzipiert wurde, ist in vielen Fällen auch eine gleichartige Überwachung von Bremseinrichtungen an horizontal verfahrbaren Maschinenkomponenten, wie z.B. Fahrständern, Schlitten, Werkstücktischen od.dgl., technisch sinnvoll, um ein durch Bremsverschleiß verursachtes Überfahren der durch das Programm vorgegebenen oder manuell eingestellten Fahrstrekken zu vermeiden.

Da eine sichere Stillsetzung von vertikal bewegten Bauteilen in bestimmten Zuständen nicht allein durch deren Motorbremse garantiert werden kann, sind an den sicherungstechnisch relevanten Maschinenteilen gesonderte Sicherheitsbremsen vorgesehen, um jegliche Gefährdungen auszuschließen. Das erfindungsgemäße Überwachungssystem arbeitet unabhängig von der Funktionsfähigkeit des einen oder anderen Bremsentyps, da es auf der Wegstreckenmessung und den jeweiligen Referenzwerten bzw. -strecken basiert. Da ein einzelner Fehler in der einen oder anderen Bremsvorrichtung nicht zum Verlust der Sicherheitsfunktion führen darf, ist das erfindungsgemäße Überwachungssystem redundant ausgeführt und gibt Aufschluß über die letztendlich entscheidende Gesamtwirkung der beteiligten Bremssysteme.

Im folgenden wird ein Ausführungsbeispiel der Erfindung anhand der Zeichnung im einzelnen beschrieben. Es zeigen:
- Fig. 1: den Teil einer Fräsmaschine; und
- Fig. 2: ein Flußdiagramm der bei einem Bremsüberwachungs-Vorgang durchgeführten Schritte.

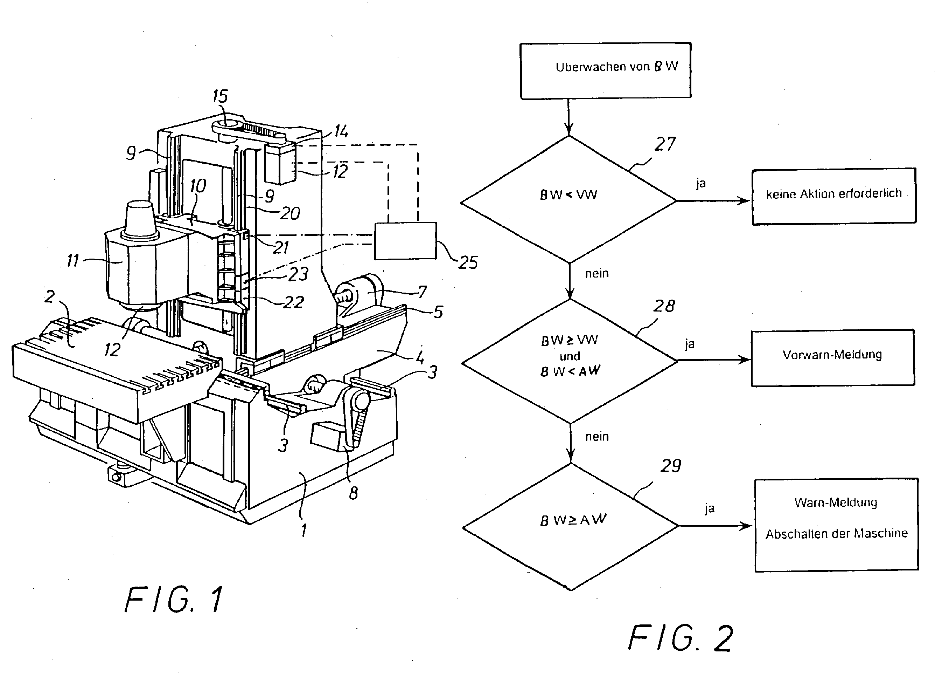

Die in Fig. 1 dargestellte Fräsmaschine ist als solche bekannt und dient lediglich zur Erläuterung der Erfindung. Diese Maschine besteht aus einem nach hinten abfallenden Schrägbett 1, an dessen Vorderseite ein Werkstücktisch 2 montiert ist. Auf dem Schrägbett 1 ist ein in Richtung einer ersten Koordinatenachse über parallele Führungsschienen 3 verfahrbarer Schlitten 4 abgestützt, auf dessen oberseitigen Führungsbahnen 5 ein Ständer 6 in einer zweiten horizontalen Koordinatenachse verfahrbar ist. Als Antriebe für die Verfahrbewegungen des Schlittens 4 und des Ständers 6 dienen Elektromotoren 7, 8 mit integrierten Betriebsbremsen, die über Keilriemen mit Spindeltrieben verbunden sind. An vorderseitigen Führungsschienen 9 des Ständers 6 ist eine Konsole 10 in der vertikalen Koordinatenachse verfahrbar, die einen Spindelkopf 11 mit darin integrierter Arbeitsspindel 12 trägt. Als Antriebsaggregat für die vertikalen Fahrbewegungen des Spindelkopfes ist am Ständer 6 ein E-Motor 13 mit integrierter Betriebsbremse 14 montiert, der über einen Keilriemen mit einem vertikalen Spindeltrieb 15 verbunden ist.

Jedem in der jeweiligen Koordinatenachse verfahrbaren Maschinenteil ist eine Wegmeßeinrichtung zugeordnet, die einen Linearmaßstab und einen an die NC-Steuereinheit der Maschine angeschlossenen Lesekopf aufweist. In Fig. 1 ist schematisch nur der Linearmaßstab 20 dargestellt, dem eine an der Konsole 10 montierte Leseeinheit 21 zugeordnet ist. In den beiden mit den vertikalen Führungsschienen 9 zusammenwirkenden Führungselementen 22 der Konsole 10 ist je eine Sicherheitsbremse 23 eingebaut, die ebenfalls an die NC-Steuereinheit 25 angeschlossen ist. In dieser NC-Steuereinheit 25 ist eine Überwachungseinrichtung für die Bremswirkung der Bremseinrichtungen 14, 23 integriert, die einen Speicher für bestimmte Bremsdaten und eine Vergleichseinheit für den Vergleich der von der Wegmeßeinrichtung 20, 21 erfaßten Bremswege mit in dem Speicher abgelegten Referenzwerten enthält. Die Arbeitsweise dieser Überwachungseinrichtung wird im folgenden anhand der Fig. 2 beschrieben.

Die Überwachung der Bremswirkung wird in den nachfolgend beschriebenen und in Fig. 2 dargestellten Schritten durchgeführt. Vor der Inbetriebnahme der Werkzeugmaschine oder ggf. nach einem Austausch eines Antriebs bzw. einer Bremseinrichtung wird vom autorisierten Personal ein Referenz-Wert RW für jede im Normalzustand befindliche Bremseinrichtung festgelegt und gespeichert. Dieser Referenzwert RW setzt sich aus einer Ansprechverzögerung dt und einem Bremswert dtB zusammen. Die Ansprechverzögerung dt kennzeichnet die Zeitspanne zwischen dem Ausschalten des Antriebs bzw. dem gleichzeitigen Aktivieren der zugehörigen Bremseinrichtung und dem Ansprechen dieser Bremseinrichtung bzw. der in dieser Zeitspanne vom Maschinenteil zurückgelegten Strecke. Der Bremswert dt_{B} ist der Wert ab dem Ansprechen der Bremseinrichtung bis zum Stillstand des abgebremsten Maschinenteils. Gleichzeitig bzw. automatisch wird ein um einen vorgegebenen Betrag größerer Vorwarnwert VW sowie ein gegenüber diesem nochmals vergrößerter Abschaltwert AB in der Speichereinheit abgelegt.

Bei jedem weiteren Bremsvorgang wird die in Fig. 2 dargestellte erfindungsgemäße Überwachungseinrichtung aktiv. In einem ersten Schritt 27 wird der von der Wegmeßeinrichtung erfaßte Bremsweg BW, bestehend aus dt und dt_{B,} in der Speichereinheit mit dem Vorwarnwert VW verglichen. Solange die Bedingung BW < VW erfüllt ist, erfolgt keine Reaktion, d.h. die Maschine und auch die jeweilige Bremseinrichtung arbeiten in ihrem normalen Betriebszustand.
Falls der Bremsweg BW den Vorwarnwert VW erreicht oder übersteigt aber noch unter dem Abschaltwert AW bleibt, erfolgt im Schritt 28 eine Vorwarn-Meldung durch Aktivieren der optischen oder akustischen Anzeige, die das Bedienungspersonal der Maschine von einem fortgeschrittenen Verschleiß oder anderen - noch nicht kritischen - Fehlfunktionen der Bremseinrichtung in Kenntnis setzt, so daß entsprechende Vorkehrungen getroffen werden können. Im Schritt 29 wird festgestellt, ob der Bremsweg BW den in der Speichereinheit abgelegten Abschaltwert AW übersteigt. Falls diese Bedingung zutrifft, erfolgt das Abschalten der Maschine zusammen mit einer entsprechenden Warnmeldung.

## Patentansprüche

1. Werkzeugmaschine mit mindestens einem motorisch verfahrbaren Maschinenteil, dem eine Bremseinrichtung, eine Wegmeßeinrichtung zum Erfassen eines Fahrweges sowie eine Steuereinrichtung mit einer Anzeigeeinheit zugeordnet sind, **gekennzeichnet durch**
eine Überwachungseinrichtung für die Bremswirkung der Bremseinrichtung, die eine Speichereinrichtung mit darin abgelegten Werten (RW, VW und AW) und eine Vergleichseinrichtung enthält, wobei eine nachlassende Bremswirkung **durch** Vergleich der von der Wegmeßeinrichtung erfaßten Bremswege mit den Werten der Speichereinrichtung ermittelt und im gegebenen Fall die Anzeigeeinrichtung aktiviert wird.

2. Werkzeugmaschine nach Anspruch 1, **dadurch gekennzeichnet, daß** in der Speichereinrichtung ein Referenzwert (RW), ein Vorwarnwert (VW) und ein Abschaltwert (AW) abgelegt sind.
